Europäisches Patentamt

European Patent Office

Office européen des brevets

(19)

(11) Publication number: **0 218 307**
A1

# EUROPEAN PATENT APPLICATION

(12)

(21) Application number: **86201751.4**

(22) Date of filing: **09.10.86**

(51) Int. Cl.⁴: **A 01 D 34/66, A 01 D 57/30**

(30) Priority: **11.10.85 NL 8502775**

(43) Date of publication of application: **15.04.87**
**Bulletin 87/16**

(84) Designated Contracting States: **DE FR GB NL**

(71) Applicant: **C. van der Lely N.V., Weverskade 10 P.O. Box 26, NL-3155 ZG Maasland (NL)**

(72) Inventor: **Van der Lely, Ary, 10A, Weverskade, Maasland (NL)**
Inventor: **Bom, Cornelis Johannes Gerardus, 16, Laan Van Nieuw Rozenburg, Rozenburg (NL)**

(74) Representative: **Mulder, Herman et al, Octrooibureau Van der Lely N.V. Weverskade 10 P.O. Box 26, NL-3155 ZG Maasland (NL)**

(54) **A rotary disc mower comprising a plurality of discs arranged above a frame beam and being rotatable around upwardly directed shafts.**

(57) A rotary disc mower, comprising a plurality of discs (2) which are arranged above a frame beam (1) and are rotatable around upwardly directed shafts and whose periphery is provided with cutting members (3), can be provided with guide members (11) to guide the mown crop, which guide members are attached to one or more discs. The guide member may have the shape of a truncated cone.

To improve the guiding action, the wall of the guide member has an out-of-round horizontal cross-section. That is to say, the shape of the said cross-section deviates from a circle. In horizontal cross-section, the peripheral wall of the guiding member may have substantially the shape of a polygon with rounded corners.

A ROTARY DISC MOWER COMPRISING A PLURALITY OF DISCS ARRANGED ABOVE A FRAME BEAM AND BEING ROTATABLE AROUND UPWARDLY DIRECTED SHAFTS

The invention relates to a rotary disc mower comprising a plurality of discs which are arranged above a frame beam and are rotatable around upwardly directed shafts, the discs being provided at their periphery with one or a plurality of cutting members, at least one disc having at its upper side a guide member having a peripheral wall which tapers in the upward direction. A mowing machine of this type usually includes a frame by means of which the frame beam can be connected to the three-point lifting arrangement of a tractor, furthermore means being present for connecting the drive for the rotatable discs, located in the frame beam, to the power take-off shaft of the tractor. The mowing machine may be hitched to the tractor in such a manner that the frame beam extends sideways relative to the tractor, it is however alternatively possible to hitch the mowing machine to the tractor such that the frame beam is in front of the tractor.

Such a mowing machine is disclosed in Dutch Patent Application 8400028, which describes a machine in which the discs are provided with guide means in the shape of a truncated cone having carrier members, for example ribs, on the cone surface. The guide member may be bolted to the rotatable discs, so that during mowing the crop is guided into a predetermined direction by the action of the carrier means.

The invention has for its object to provide a disc mower of the above-described type, an efficient guide member of a simple construction being present.

According to the invention, the peripheral wall of the guide member has an out-of-round horizontal cross-section. As the discs rotate at a relatively high speed, guiding of the crop is already accomplished when the guide member deviates relatively little from the round shape. Thus it proved to be possible to obtain an effective guide member without welding special carrier members to the surface.

In accordance with a further characteristic of the invention, a horizontal cross-section through the peripheral wall of the guide member has substantially the shape of a polygon with rounded corners and, preferably, the shape of a regular triangle or quadrangle, which proved very satisfactory in practice. So as to realize effective guiding of the crop, the guide member has, in accordance with a further characteristic of the invention, a height exceeding 10 cms.

In accordance with a still further characteristic of the invention, the lower edge of the guide member may be provided with one or a plurality of substantially horizontal portions, for connection to the relevant disc, which connection can be effected with bolts, for example the bolts by means of which the cutters are secured to the discs. Furthermore, in accordance with the invention, one of the outermost discs may be provided with the guide member, which disc effects an inwardly directed rotational movement, causing the crop to be conveyed to the central portion of the frame beam.

For a further elucidation of the invention some embodiments will be described with reference to the accompanying drawings.

Figure 1 is a plan view of a disc mower;

Figure 2 is a view taken in the direction of the arrow II in Figure 1, and

Figure 3 is a partial plan view of a second embodiment.

In the different Figures corresponding components are give the same reference numerals.

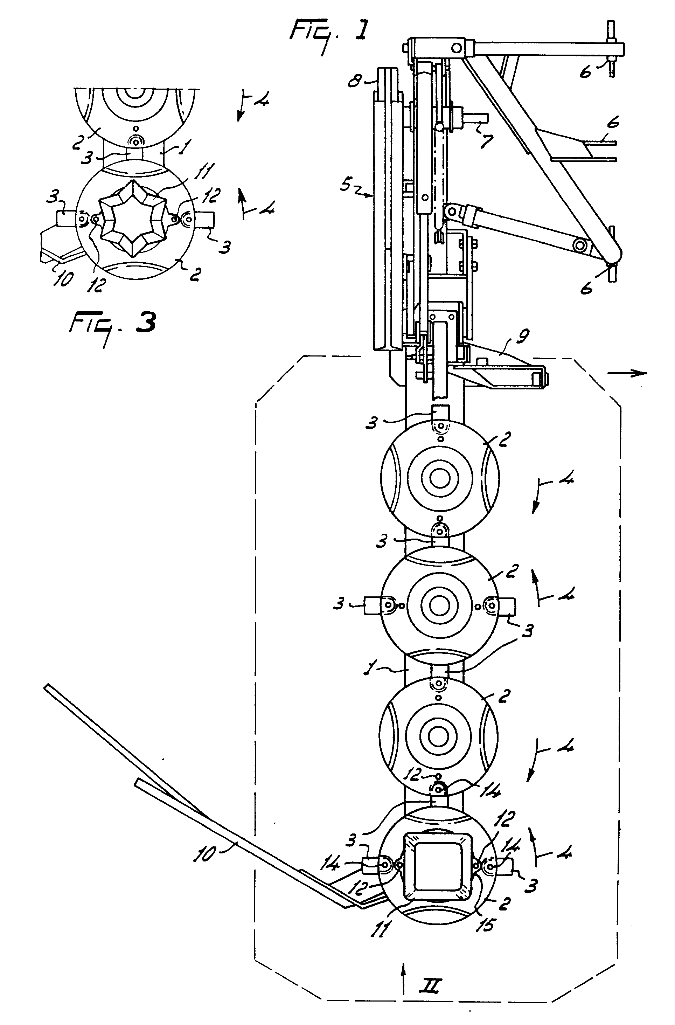

Figure 1 shows a disc mower of the type described in detail in Dutch Patent Application 8400028.

The mower comprises a frame beam 1 whose upper side is provided with four mowing discs 2. Each mowing disc 2 can rotate around a substantially vertical shaft and has two cutting members 3. Two adjacent mowing discs 2 rotate in opposite directions, such as indicated by the arrows IV.

The frame beam 1 is connected to a frame 5 which can be connected to the three-point lifting arrangement of a tractor by means of the connection means 6. In this situation, the power take-off shaft of the tractor can be connected via the shaft 7 and belt transmission 8 to the drive means, present in the frame beam 1, for the mowing discs 2.

During operation the frame beam 1 is near the soil, it being possible to support the arrangement by means of a slide member 9 and any other supporting means which may be present under the frame beam 1.

Additionally, the mower includes a swath board 10 for guiding the mown crop.

As is shown in Figure 1, the outermost mowing disc 2 has a guide member 11 bolted to the disc by means of bolts 12. In plan view the guide member 11 has a substantially square shape with rounded corners and is made from plate material, so that a horizontal cross-section through the guide member 11 has substantially the shape of a square.

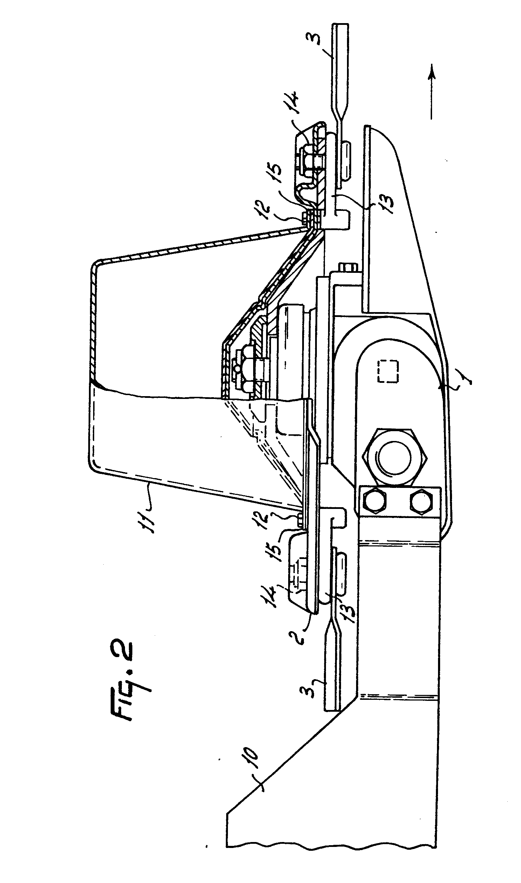

Figure 2 is a partial cross-section through the mowing disc 2 provided with the guide member 11. Figure 2 shows intermediate elements 13, one side of the intermediate elements being provided with the cutting member 3 and the other side being fastened to the mowing disc by means of two bolts 12, 14. In this embodiment, said bolts 12 are also used for securing the guide member 11 to the mowing disc 2. To that end the guide member 11 is provided near its lower edge with a substantially horizontal portion 15 having holes through which the bolts 12 can reach.

A simple guide member, obtained, for example, by

3

means of a deep drawing operation, with integral carrier means may also be of a shape as shown in, for example, Figure 3. This guide member 11 has a horizontal cross-section in the shape of a six-pointed star. This guide member can be connected to the mowing disc in a similar way as described with reference to Figure 2.

Obviously, the shape of the guide member can vary in many ways within the scope of the invention, always an element, which is simple to construct and has the required guiding action, being obtained.

The word tapering used in the description of invention must be taken in a wide sense, that is to say dimensions are decreasing, in any way whatsoever.

CLAIMS:

1. A rotary disc mower, comprising a plurality of discs which are arranged above a frame beam and are rotatable around upwardly direction shafts and whose periphery is provided with one or a plurality of cutting members, at least one disc having at its upper side a guide member for the mown crop, having a peripheral wall which tapers in the upward direction, characterized in that the peripheral wall of the guide member has an out-of-round horizontal cross-section.

2. A disc mower as claimed in claim 1, characterized in that in a horizontal cross-section the peripheral wall has substantially the shape of a polygon with rounded corners.

3. A disc mower as claimed in claim 2, characterized in that the polygon is a regular triangle or quadrangle.

4. A disc mower as claimed in any one of the preceding claims, characterized in that the height of the guide member exceeds 10 cms.

5. A disc mower as claimed in any one of the preceding claims, characterized in that the guide member consists of an element obtained by deforming plate material.

6. An arrangement as claimed in any one of the preceding claims, characterized in that at its lower edge the guide member has one or a plurality of substantially horizontal portions for connection to the relevant disc.

7. A disc mower as claimed in any one of the preceding claims, characterized in that one of the outermost discs is provided with the guide member.

FIg. 1

FIg. 3

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 557 418 (VAN DER LELY) * Page 7, line 40 - page 8, line 15; page 8, lines 37-39 * & NL-A-84 00 028 (Cat. D) | 1 | A 01 D 34/66 A 01 D 57/30 |
| A | | 6,7 | |
| Y | GB-A-1 117 035 (FAHR) * Page 2, lines 30-40; claim 3 * | 1 | |
| A | | 2,3 | |
| X | DE-A-3 120 209 (GRENZEBACH) * Page 4, paragraph 2; page 5, figures A,B,C * | 1,3,4 | |
| | | | **TECHNICAL FIELDS SEARCHED (Int. Cl.4)** |
| A | DE-A-2 222 415 (GRENZEBACH) * Page 3, lines 24-26; figures 5,6 * | 1,3 | A 01 D |
| A | GB-A-1 174 728 (ZWEEGERS) | | |
| A | NL-A-7 500 382 (EXPERT) | | |
| A | DE-A-1 903 729 (GRENZEBACH) | | |
| | --- -/- | | |

The present search report has been drawn up for all claims

| Place of search | Date of completion of the search | Examiner |
|---|---|---|
| THE HAGUE | 12-01-1987 | DE LAMEILLIEURE D. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | NL-A-8 403 316 (VAN DER LELY) | | |
| | --- | | |
| A | FR-A-2 306 621 (MULTINORM) | | |
| | ----- | | |

TECHNICAL FIELDS
SEARCHED (Int. Cl.4)

The present search report has been drawn up for all claims

| Place of search | Date of completion of the search | Examiner |
|---|---|---|
| THE HAGUE | 12-01-1987 | DE LAMEILLIEURE D. |